# EUROPÄISCHE PATENTSCHRIFT

(11) **EP 2 388 565 B1**
(45) Veröffentlichungstag und Bekanntmachung des Hinweises auf die Patenterteilung: **26.07.2017**
(21) Anmeldenummer: 11165299.6
(22) Anmeldetag: 09.05.2011
(51) Int. Cl.: G01L 3/10, B25J 13/08, G01D 3/08

(54) **Messvorrichtung und Roboter**
Measuring device and robot
Dispositif de mesure et robot

(30) Priorität: 20.05.2010 DE 102010029186
(43) Veröffentlichungstag der Anmeldung: 23.11.2011
(73) Patentinhaber: KUKA Roboter GmbH, 86165 Augsburg (DE)
(72) Erfinder: Langhans, Michael, 86483, Balzhausen (DE)
(74) Vertreter: Schlotter, Alexander Carolus Paul

(56) Entgegenhaltungen:
- EP-A1- 1 752 361
- WO-A2-2006/053244
- DE-A1- 10 041 989
- DE-A1- 10 217 014
- DE-A1-102007 063 099
- GB-A- 2 285 865
- JP-A- 2000 146 723
- US-A1- 2003 062 982

## Beschreibung

Die Erfindung betrifft eine Messvorrichtung und einen Roboter mit dieser Messvorrichtung.

Roboter sind Arbeitsmaschinen, die zur automatischen Handhabung und/ oder Bearbeitung von Objekten mit Werkzeugen ausgerüstet werden können und in mehreren Bewegungsachsen beispielsweise hinsichtlich Orientierung, Position und Arbeitsablauf programmierbar sind. Roboter weisen üblicherweise einen Roboterarm mit mehreren über Gelenke verbundene Glieder und programmierbare Steuerungen (Steuervorrichtungen) auf, die während des Betriebs die Bewegungsabläufe des Roboters steuern bzw. regeln. Die Glieder werden über Antriebe, die von der Steuervorrichtung angesteuert werden, insbesondere bezüglich der Bewegungsachsen bewegt.

Die DE 10 2007 063 099 A1 offenbart einen Roboter mit mehreren, bezüglich Drehachsen relativ zueinander drehbaren Gliedern. Um die auf die Drehachsen ausgeübten Momente zu ermitteln, umfasst der Roboter geeignete Sensoren, die z.B. Dehnmessstreifen umfassen, deren ohmsche Widerstände sich bei Dehnung bzw. Stauchung des Dehnmessstreifens ändern. Die einzelnen Sensoren können mehrere Dehnmessstreifen aufweisen, die z.B. als Halb- oder Vollbrücken geschaltet sind. Um die Sicherheit der Momentenerfassung zu erhöhen, können für wenigstens eine der Drehachsen zwei Sensoren und redundante Auswerteeinrichtungen zur redundanten Auswertung vorgesehen sein.

Die GB 2 285 865 A offenbart eine Messvorrichtung zum Ermitteln eines auf eine Achse wirkenden Drehmoments, welche eine Wheatsone Brücke umfasst, die mit einer elektrischen Spannung von 5Volt beaufschlagt ist und der ein elektrischer Schaltkreis nachgeschaltet ist. Es können sechs dieser Messvorrichtungen verwendet werden, von denen drei verwendet werden, um das auf die Achse wirkende Drehmoment zu ermitteln. Die restlichen Messvorrichtungen werden als Reservemessvorrichtungen vorgehalten.

Die US 2003/0062982 A1 offenbart einen Dehnungsmessstreifen, dessen elektrischer Widerstand sich mit Dehnung des Dehnungsmessstreifens ändert.

Die DE 102 17 014 A1 offenbart ein Verfahren und eine Einrichtung zum Überwachen einer drehmomentengeregelten Antriebseinheit, bei dem bzw. bei der eine Wheatstone Brücke verwendet wird.

Die JP 2000146723 offenbart einen weiteren Drehmomentensensor, welcher zwei Spulen zum Erfassen des Drehmoments umfasst, und die DE 100 41 989 A1 offenbart eine fehlertolerante Sensorik.

Aufgabe der Erfindung ist es, eine verbesserte Drehmomentmessung insbesondere in sicherer Technik anzugeben.

Die Aufgabe der Erfindung wird gelöst durch eine Messvorrichtung zum Ermitteln eines auf eine Achse wirkenden Drehmoments, aufweisend
- eine erste Einrichtung, die eingerichtet ist, ein dem Drehmoment zugeordnetes erstes analoges elektrisches Signal zu erzeugen,
- einen der ersten Einrichtung nachgeschalteten ersten Analog-Digital-Wandler, der eingerichtet ist, aus dem ersten analogen elektrischen Signal ein dem Drehmoment zugeordnetes erstes digitalisiertes Signal zu erzeugen,
- eine dem ersten Analog-Digital-Wandler nachgeschaltete erste digitale Auswerteeinrichtung, die eingerichtet ist, aus dem ersten digitalisierten Signal das Drehmoment zu ermitteln,
- eine zweite Einrichtung, die eingerichtet ist, ein dem Drehmoment zugeordnetes zweites analoges elektrisches Signal zu erzeugen,
- einen der zweiten Einrichtung nachgeschalteten zweiten Analog-Digital-Wandler, der eingerichtet ist, aus dem zweiten analogen elektrischen Signal ein dem Drehmoment zugeordnetes zweites digitalisiertes Signal zu erzeugen,
- eine dem zweiten Analog-Digital-Wandler nachgeschaltete zweite digitale Auswerteeinrichtung, die eingerichtet ist, unabhängig von der ersten digitalen Auswerteeinrichtung aus dem zweiten digitalisierten Signal das Drehmoment zu ermitteln,
- eine als ein erster Digital-Analog-Wandler ausgeführte erste elektrische Spannungsquelle, die eingerichtet ist, eine erste Referenzspannung für die zweite Einrichtung zu erzeugen, und
- eine als ein zweiter Digital-Analog-Wandler (ausgeführte zweite elektrische Spannungsquelle, die eingerichtet ist, eine zweite Referenzspannung für die erste Einrichtung zu erzeugen, wobei die erste digitale Auswerteeinrichtung mit dem ersten Digital-Analog-Wandler verbunden ist, um den Wert der von dem ersten Digital-Analog-Wandler erzeugten ersten Referenzspannung einzustellen, und die erste digitale Auswerteeinrichtung mit dem zweiten Digital-Analog-Wandler verbunden ist, um den Wert der von dem zweiten Digital-Analog-Wandler erzeugten zweiten Referenzspannung einzustellen.

Das auf die Achse ausgeübte Drehmoment wird z.B. von einem Glied ausgeübt, das insbesondere relativ zu einem weiteren Glied bezüglich der Achse drehbar gelagert ist bzw. über ein Gelenk mit dem weiteren Glied verbunden ist, sodass das Drehmoment auf das Gelenk wirkt.

Ein weiterer Aspekt der Erfindung betrifft einen Roboter, aufweisend eine Steuervorrichtung, einen mittels der Steuervorrichtung bewegbaren Roboterarm, der mehrere Glieder aufweist, von denen wenigstens eines, gesteuert durch die Steuervorrichtung, mittels eines ein Getriebe aufweisenden Antrieb bezüglich einer Achse bewegbar ist, und die erfindungsgemäße Messvorrichtung. Insbesondere kann die erste Einrichtung und die zweite Einrichtung der erfindungsgemäßen Messvorrichtung derart mit dem Getriebe gekoppelt sein, dass das erste und das zweite analoge elektrische Signal jeweils einer abtriebsseitigen Drehmomentmessung des relevanten Gliedes auf seine Achse zugeordnet sind.

Die erfindungsgemäße Messvorrichtung umfasst demnach zwei voneinander getrennte Drehmomentmessungen, die aufgrund der relativ wenigen Bauteile einen relativ geringen Verdrahtungsaufwand zu Folge hat. Dadurch kann die erfindungsgemäße Messvorrichtung platzsparend ausgeführt werden.

Die erste Einrichtung kann vorzugsweise einen ersten Dehnmessstreifen oder eine Gruppe von ersten Dehnmessstreifen aufweisen, die insbesondere auf einem mechanischen Messkörper aufgebracht sind. Die zweite Einrichtung kann einen zweiten Dehnmessstreifen oder eine Gruppe von zweiten Dehnmessstreifen aufweisen, die insbesondere auf einem weiteren mechanischen Messkörper aufgebracht sind. Es ist auch möglich, den ersten und zweiten Dehnmessstreifen bzw. die Gruppen von ersten und zweiten Dehnmessstreifen auf einem gemeinsamen Messkörper aufzubringen.

Drehmomenterfassung mittels eines oder mehrere Dehnmessstreifen sind dem Fachmann im Prinzip z.B. aus der in der Einleitung genannten DE 10 2007 063 099 A1 bekannt. Dehnmessstreifen sind Bauelemente, die insbesondere auch eine relativ kleine Längenänderung, wie sie z.B. durch das Einwirken einer externen Kraft oder eines externen Momentes auftritt, in eine messbare elektrische Widerstandsänderung umsetzen. Der oder die Dehnmessstreifen sind beispielsweise auf einem entsprechend mechanisch ausgelegten Messkörper angebracht. Der Messkörper kann vorzugsweise derart ausgeführt sein, dass sich durch ein am Messkörper anliegendes mechanisches Drehmoment eine gegebenenfalls geringe, reversible mechanische Verformung des Messkörpers ergibt, die auf den oder die Dehnmessstreifen übertragen wird. Durch eine geeignete mechanische Auslegung des Messkörpers und des Dehnmessstreifens bzw. der Dehnmessstreifen ergibt sich eine dem Drehmoment proportionale Widerstandsänderung im Dehnmessstreifen.

Eine Drehmomentmessung mittels eines mechanischen Messkörpers und darauf angebrachtem, gegebenenfalls aufgeklebtem Dehnmessstreifen ist beispielsweise auch in Leichtbaurobotern realisierbar, da sich die Messkörper und Dehnmessstreifen auch in relativ kleiner Bauform und somit platzsparend ausführen lassen.

Vorzugsweise werden mehrere Dehnmessstreifen, insbesondere vier Dehnmessstreifen pro Einrichtung verwendet, die zu einer dem Fachmann im Prinzip bekannten Brückenschaltung (Vollbrücke) verbunden sind. Ein Vorteil der Brückenschaltung kann sein, dass die Einrichtung weniger temperaturabhängig ist.

Es kann auch vorgesehen sein, das erste analoge elektrische Signal mittels einer zwischen der ersten Einrichtung und dem ersten Analog-Digital-Wandler geschalteten ersten analogen Signalverarbeitungsvorrichtung zu verarbeiten, sodass dem ersten Analog-Digital-Wandler das analog verarbeitete erste analoge elektrische Signal zugeführt wird. Zusätzlich oder alternativ ist es auch möglich, das zweite analoge elektrische Signal mittels einer zwischen der zweiten Einrichtung und dem zweiten Analog-Digital-Wandler geschalteten zweiten analogen Signalverarbeitungsvorrichtung zu verarbeiten, sodass dem zweiten Analog-Digital-Wandler das analog verarbeitete zweite analoge elektrische Signal zugeführt wird. Die Signalverarbeitungseinrichtungen sind beispielsweise Filter und/oder Verstärker.

Die erste digitale Auswerteeinrichtung kann vorzugsweise als ein erstes FPGA ausgeführt sein, und/oder die zweite digitale Auswerteeinrichtung kann vorzugsweise als ein zweites FPGA ausgeführt sein. Ein Field Programmable Gate Array, abgekürzt "FPGA", ist ein integrierter Schaltkreis der Digitaltechnik, in den eine logische Schaltung programmiert werden kann.

Die FPGAs können auch bereits eine Vielzahl anderer Aufgaben im Gelenk, wie z.B. Regelung, Schnittstelle zur Steuerung usw., übernehmen. Diese Schaltungen ermöglichen es, dass die erfindungsgemäße Drehmomenterfassung relativ einfach und demnach auch kostengünstig realisiert werden kann. Dadurch ist es möglich, zusätzliche frei programmierbare Bausteine für die erfindungsgemäße Messvorrichtung zu vermeiden. Diese weisen nämlich nicht nur den Nachteil auf, einen erhöhten Platzbedarf zu beanspruchen, sondern benötigen auch eine relativ aufwändige Software-Entwicklung mit gegebenenfalls relativ aufwändiger Abnahme.

Mittels der erfindungsgemäßen Messvorrichtung kann ein von einem relativ zur Achse drehbar gelagertes Glied auf die Achse ausgeübtes Drehmoment erfasst werden. Das Glied kann insbesondere mittels eines ein Getriebe aufweisenden Antriebs bezüglich der Achse relativ zu einem weiteren Glied drehbar sein. Dann kann die erfindungsgemäße Messvorrichtung derart ausgeführt sein, dass die erste Einrichtung und die zweite Einrichtung derart mit dem Getriebe gekoppelt sind, dass das erste und das zweite analoge elektrische Signal einer abtriebsseitigen Drehmomentmessung zugeordnet sind.

Nach einer bevorzugten Variante der erfindungsgemäßen Messvorrichtung sind der erste Analog-Digital-Wandler und der zweite Analog-Digital-Wandler zu einer ersten Baugruppe zusammengefasst. Diese Baugruppe kann relativ platzsparend ausgeführt sein und kann demnach relativ gut abtriebsseitig im oder am Glied befestigt werden. Gegebenenfalls sind dann auch die beiden analogen Signalverarbeitungsvorrichtungen Teil dieser ersten Baugruppe.

Die beiden digitalen Auswerteeinrichtungen können vorzugsweise zu einer zweiten Baugruppe zusammengefasst sein. Der erste Analog-Digital-Wandler kann mit der ersten digitalen Auswerteeinrichtung über einen ersten Bus bzw. eine erste Leitung und der zweite Analog-Digital-Wandler mit der zweiten digitalen Auswerteeinrichtung über einen zweiten Bus bzw. eine zweite Leitung kommunizieren. Da die beiden Analog-Digital-Wandler gemäß dieser Variante mit ihren Auswerteeinrichtungen über getrennte Leitungen bzw. Busse kommunizieren, braucht diese Signalübertragung nicht mit speziellen Überwachungsmethoden, z.B. einer Checksumme, versehen zu sein.

Die erfindungsgemäße Messvorrichtung ist insbesondere vorgesehen, dass die beiden Drehmomentmessungen miteinander verglichen werden, sei es durch eine externe Vorrichtung oder durch wenigstens eine der beiden Auswerteeinrichtungen. Dazu ist es wünschenswert, dass die Drehmomentmessungen zum selben Zeitpunkt erfolgen. Um dies sicher zu stellen, kann eine der digitalen Auswerteeinrichtungen insbesondere über einen dritten Bus bzw. eine dritte Leitung den beiden Analog-Digital-Wandlern einen Befehl schicken, damit diese ihre digitalisierten Signale erzeugen und an die jeweiligen Auswerteeinrichtungen abgeben. Somit kann in relativ einfacher Weise eine Synchronisation der beiden Drehmomentmessungen erfolgen. Der Befehl, den einer der beiden Auswerteeinrichtungen erzeugt, kann auch an die andere Auswerteeinrichtung z.B. über eine weitere Leitung oder einen weiteren Bus erfolgen, um auch die beiden Auswerteeinrichtungen zu synchronisieren.

Die beiden digitalen Auswerteeinrichtungen können auch über einen vierten Bus bzw. einer vierten Leitung verbunden sein, um eine Information über die ermittelten Drehmomente auszutauschen. Dann ist z.B. ein Kreuzvergleich der beiden Drehmomentmessungen mittels wenigstens einer der beiden Auswerteeinrichtungen möglich.

Die erfindungsgemäße Messvorrichtung umfasst die erste elektrische Spannungsquelle, die eingerichtet ist, die erste Referenzspannung für die zweite Einrichtung zu erzeugen und die zweite elektrische Spannungsquelle, die eingerichtet ist, die zweite Referenzspannung für die erste Einrichtung zu erzeugen. Somit sind gegebenenfalls den beiden Einrichtungen jeweils eigene Referenzspannungsquellen zugeordnet, wodurch die Sicherheit der erfindungsgemäßen Messvorrichtung erhöht werden kann. Die Referenzspannungen sind insbesondere dann nötig, wenn die Einrichtungen wenigstens einen Dehnmessstreifen umfassen.

Die erste elektrische Spannungsquelle ist als der erste Digital-Analog-Wandler ausgeführt und die zweite elektrische Spannungsquelle als die zweiter Digital-Analog-Wandler ausgeführt. Die erste digitale Auswerteeinrichtung ist mit dem ersten Digital-Analog-Wandler verbunden, um den Wert der von dem ersten Digital-Analog-Wandler erzeugten ersten Referenzspannung einzustellen, und/oder die erste digitale Auswerteeinrichtung mit dem zweiten Digital-Analog-Wandler verbunden ist, um den Wert der von dem zweiten Digital-Analog-Wandler erzeugten zweiten Referenzspannung einzustellen. Dann ist es in relativ einfacher Weise möglich, die Funktionsweise der erfindungsgemäßen Messvorrichtung, gesteuert durch die digitalen Auswerteeinrichtungen, zu überprüfen. Die erfindungsgemäße Messvorrichtung kann dann eingerichtet sein, ihre Funktionsweise selber zu prüfen. Es ist auch möglich, dass die zweite Auswerteeinrichtung beide Digital-Analog-Wandler ansteuert, damit diese die gewünschten Referenzspannungen erzeugen. Es ist auch möglich, dass einer der Auswerteeinrichtungen einen der Digital-Analog-Wandler und die andere Auswerteeinrichtung den anderen Digital-Analog-Wandler ansteuert, damit die gewünschten Referenzspannungen erzeugt werden.

Um die erfindungsgemäße Messvorrichtung möglichst kompakt gestalten zu können, kann vorzugsweise der erste Analog-Digital-Wandler und der erste Digital-Analog-Wandler zu einem ersten integrierten Bauteil zusammen gefasst sein, und/oder der zweite Analog-Digital-Wandler und der zweite Digital-Analog-Wandler zu einem zweiten integrierten Bauteil zusammen gefasst sein.

Je nach Ausführungsform der erfindungsgemäßen Messvorrichtung kann ein Test der analogen Signalkette durch die gegebenenfalls integrierten Digital-Analog-Wandler erfolgen. Dadurch kann der Verdrahtungs- und Bauteilaufwand relativ gering gehalten werden.

Ein weiterer Vorteil der erfindungsgemäßen Messvorrichtung kann je nach Ausführungsform sein, dass gegebenenfalls durch ein zu Testzwecken vorgesehenes Absenken der Versorgungs- bzw. Referenzspannung der Einrichtungen sich das Messsignal immer nur proportional zur angelegten Versorgungs / Referenzspannung ändert. Da gegebenenfalls der Digitalelektronik der für den Test vorgegebene Spannungswert bekannt ist, können auch die während des Selbsttests gegebenenfalls gemessenen Brücken-Diagonalspannungen zur Berechnung eines Drehmoments herangezogen werden. Es entstehen also keine "Lücken" in der zeitlichen Abfolge der Messwerterfassung

Ein Ausführungsbeispiel der Erfindung ist exemplarisch in den beigefügten schematischen Figuren dargestellt. Es zeigen:
- Fig. 1: einen Roboter mit einem mehrere Glieder aufweisenden Roboterarm,
- Fig. 2: einen Ausschnitt des Roboters in einer geschnittenen Darstellung und
- Fig. 3: eine Messvorrichtung zum Erfassen eines Drehmoments, das eines der Glieder des Roboterarms auf seine Achse ausübt.

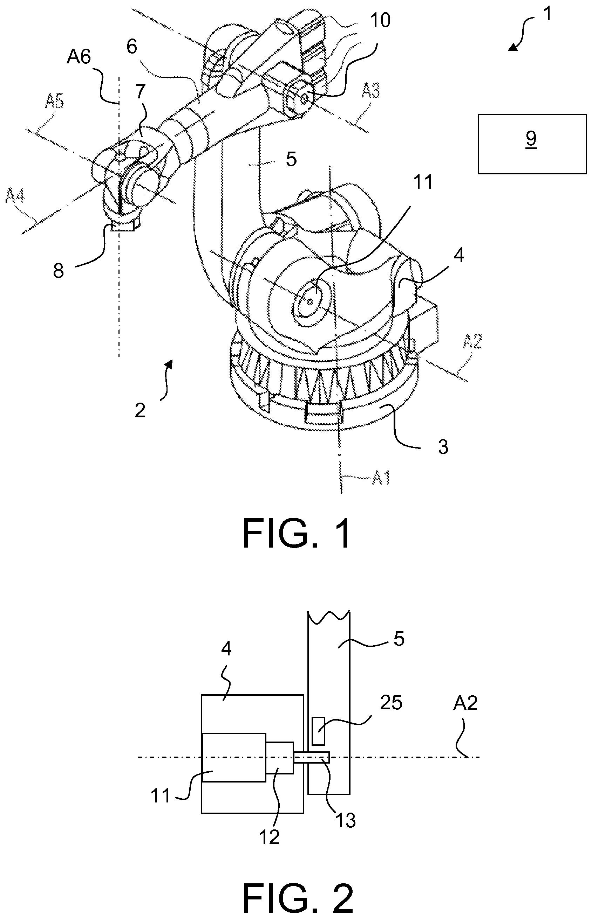

Die Fig. 1 zeigt in einer perspektivischen Darstellung einen Roboter 1 mit einem Roboterarm 2.

Der Roboterarm 2 umfasst im Falle des vorliegenden Ausführungsbeispiels mehrere nacheinander angeordnete und mittels Gelenke verbundene Glieder. Bei den Gliedern handelt es sich insbesondere um ein ortsfestes oder bewegliches Gestell 3 und ein relativ zum Gestell 3 um eine vertikal verlaufende Achse A1, die auch als Achse 1 bezeichnet wird, drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einem Flansch 8. Die Schwinge 5 ist am unteren Ende z.B. an einem nicht näher dargestellten Schwingenlagerkopf auf dem Karussell 4 um eine vorzugsweise horizontale Achse A2, die auch als Achse 2 bezeichnet wird, schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen A4, A5, A6.

Um den Roboter 1 bzw. dessen Roboterarm 2 zu bewegen, umfasst dieser in allgemein bekannter Weise mit einer Steuervorrichtung 9 verbundene Antriebe, die insbesondere elektrische Antriebe sind. In der Figur 1 sind nur einige der elektrischen Motoren 10, 11 dieser Antriebe gezeigt.

Die Figur 2 zeigt in geschnittener Darstellung das Karussell 4 und einen Teil der Schwinge 5, die relativ zum Karussell 4 bezüglich der Achse A2 mittels des elektrischen Motors 11 bewegbar ist. Im Falle des vorliegenden Ausführungsbeispiels sind den einzelnen Motoren 10, 11 jeweils ein Getriebe 12 zugeordnet, über die die Motoren 10, 11 ihre jeweiligen Glieder, z.B. die Schwinge 5 mittels einer Welle 13 bewegen.

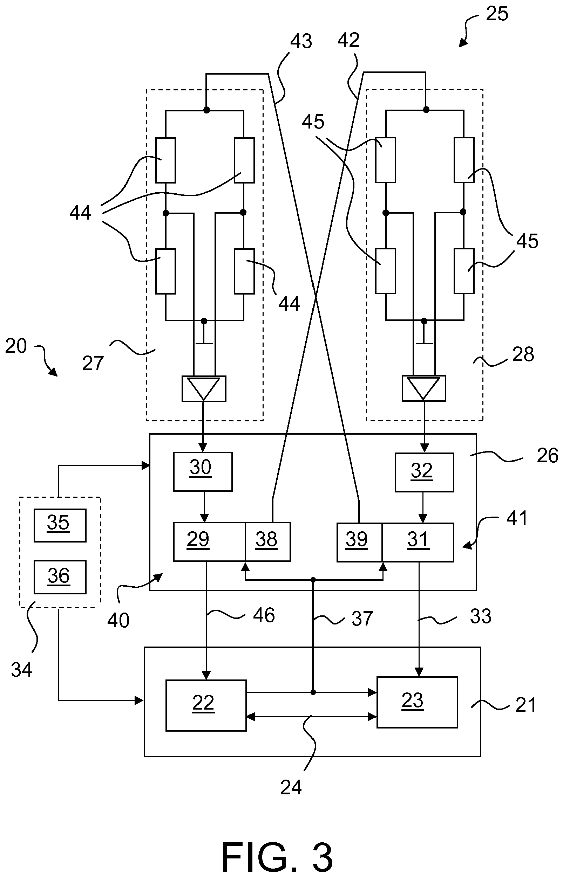

Im Falle des vorliegenden Ausführungsbeispiels werden die einzelnen Drehmomente, die die Glieder auf ihre Achsen A1-A6 bzw. den Wellen 13 ausüben, jeweils mittels einer in der Figur 3 gezeigten Messvorrichtung 20 ermittelt. Die Ausgangssignale der Messvorrichtungen 20, also die entsprechenden ermittelten Drehmomente, werden beispielsweise der Steuervorrichtung 9 übermittelt.

Im Falle des vorliegenden Ausführungsbeispiels weist die Messvorrichtung 20 eine Baugruppe bzw. digitale Auswerteelektronik 21 auf, die beispielsweise Teil der Steuervorrichtung 9 sein kann oder z.B. im oder am Roboterarm 2, vorzugsweise im oder am Gestell 3 des Roboters 1 befestigt ist. Gemäß einem weiteren bevorzugten Ausführungsbeispiel ist die vorgesehene Einrichtung in jedem Gelenk des Roboters verbaut und misst dort das auftretende Drehmoment.

Im Falle des vorliegenden Ausführungsbeispiels weist die digitale Auswertevorrichtung 21 eine erste digitale Auswerteeinrichtung 22 und eine getrennt bzw. unabhängig von der ersten Auswerteeinrichtung 22 arbeitende zweite Auswerteeinrichtung 23 auf. Die beiden Auswerteeinrichtungen 22, 23 sind z.B. als FPGAs (Field Programmable Gate Array) ausgeführt und können über eine Leitung bzw. einen Bus 24, der z.B. als ein SPI-Bus ausgeführt ist, kommunizieren.

Des Weiteren weist im Falle des vorliegenden Ausführungsbeispiels die Messvorrichtung 20 eine weitere Baugruppe bzw. Erfassungsvorrichtung 25 auf, die insbesondere eine Platine 26 aufweist, auf der mehrere elektronische Bauteile angeordnet sind. Die Erfassungsvorrichtung 25 ist abtriebsseitig bezüglich der einzelnen Motoren 10, 11 bzw. Getriebe 12 im oder am Roboterarm 2 angeordnet. Beispielsweise ist im Falle des vorliegenden Ausführungsbeispiels die Erfassungsvorrichtung 25, die das von der Schwinge 5 ausgeübte Drehmoment ermittelt, in der Schwinge 5 befestigt.

Im Falle des vorliegenden Ausführungsbeispiels umfasst die Erfassungsvorrichtung 25 eine erste Einrichtung 27, die eingerichtet ist, ein dem Drehmoment zugeordnetes erstes analoges elektrisches Signal zu erzeugen, und eine zweite Einrichtung 28, die eingerichtet ist, ein dem Drehmoment zugeordnetes zweites analoges elektrisches Signal zu erzeugen

Die erste Einrichtung 27 umfasst z.B. wenigstens einen Dehnmessstreifen 44, der auf einem nicht näher dargestellten, dem Fachmann im Prinzip bekannten Messkörper mechanisch angeordnet, beispielsweise aufgeklebt ist. Der Messkörper der ersten Einrichtung 27 ist beispielsweise mechanisch mit dem Getriebe 12 gekoppelt, sodass im vorliegenden Fall eine abtriebsseitige Drehmomentmessung ermöglicht wird.

Im vorliegenden Ausführungsbeispiel umfasst die erste Einrichtung 27 vier erste Dehnmessstreifen 44, die zu einer Brückenschaltung verbunden sind, wie dies in der Fig. 3 dargestellt ist.

Aufgrund eines vom relevanten Glied auf seine Achse einwirkenden Drehmoments wird der Messkörper gedehnt, was wiederum eine Dehnung bzw. Stauchung der ersten Dehnmessstreifen 44 zur Folge hat. Bei den gestreckten ersten Dehnmessstreifen 44 ist dadurch eine Erhöhung des elektrischen Widerstands zu verzeichnen und bei den gestauchten ersten Dehnmessstreifen 44 eine Verringerung des Widerstands. Bedingt durch die Anordnung der ersten Dehnmessstreifen 44 in einer Brückenschaltung ist das Ausgangssignal der ersten Einrichtung 27, die so genannte Brückendiagonalspannung, proportional zum gemessenen Drehmoment.

Die zweite Einrichtung 28 ist im Falle des vorliegenden Ausführungsbeispiels ähnlich der ersten Einrichtung 27 ausgebildet und weist daher einen nicht näher dargestellten, beispielsweise mechanisch mit dem Getriebe 12 gekoppelten weiteren Messkörper auf, auf dem zweite Dehnmessstreifen 45 befestigt sind. Die zweiten Dehnmessstreifen 45 sind ebenfalls in einer Brückenschaltung geschaltet, sodass bedingt durch diese Anordnung der zweiten Dehnmessstreifen 45 das Ausgangssignal der zweiten Einrichtung 28 proportional zum gemessenen Drehmoment ist. Die ersten und zweiten Dehnmessstreifen 44,45 der ersten und zweiten Einrichtungen 27,28 können auch gemeinsam auf einem Messkörper angeordnet sein, sodass eine kompakte Gesamtstruktur erzielbar ist.

Der Ausgang der ersten Einrichtung 27 ist mit dem Eingang eines ersten Analog-Digital-Wandler 29 der Erfassungsvorrichtung 25 verbunden. Um beispielsweise das Ausgangssignal der ersten Einrichtung 27 zu glätten oder dem ersten Analog-Digital-Wandler 29 anzupassen, kann, wie dies im gezeigten Ausführungsbeispiel vorgesehen ist, zwischen der ersten Einrichtung 27 und dem ersten Analog-Digital-Wandler 29 eine erste analoge Signalverarbeitungsvorrichtung 30 vorgesehen sein, die das analoge Ausgangssignal der ersten Einrichtung 27 verarbeitet, z.B. filtert und/oder verstärkt. Das mittels der ersten analogen Signalverarbeitungsvorrichtung 30 verarbeitete Ausgangssignal der ersten Einrichtung 27 ist das Eingangssignal des ersten Analog-Digital-Wandlers 29. Das Ausgangssignal des ersten Analog-Digital-Wandlers 29 ist somit ebenfalls ein Maß für das von der Schwinge 5 aufgebrachte Drehmoment in digitaler Form.

Der erste Analog-Digital-Wandler 29 ist mit der ersten Auswerteeinrichtungen 22 z.B. über eine Leitung oder einen Bus 46, der vorzugsweise als ein SPI-Bus ausgeführt ist, verbunden. Die erste Auswerteeinrichtung 22 ist eingerichtet, aufgrund des vom ersten Analog-Digital-Wandler 29 stammenden Ausgangssignals das von der Schwinge 5 ausgeübte Drehmoment zu ermitteln.

Der Ausgang der zweiten Einrichtung 28 ist mit dem Eingang eines zweiten Analog-Digital-Wandler 31 der Erfassungsvorrichtung 25 verbunden. Um beispielsweise das Ausgangssignal der zweiten Einrichtung 28 zu glätten oder dem zweiten Analog-Digital-Wandler 31 anzupassen, kann, wie dies im gezeigten Ausführungsbeispiel vorgesehen ist, zwischen der zweiten Einrichtung 28 und dem zweiten Analog-Digital-Wandler 31 eine zweite analoge Signalverarbeitungsvorrichtung 32 vorgesehen sein, die das analoge Ausgangssignal der zweiten Einrichtung 28 verarbeitet, z.B. filtert und/oder verstärkt. Das mittels der zweiten analogen Signalverarbeitungsvorrichtung 32 verarbeitete Ausgangssignal der zweiten Einrichtung 28 ist das Eingangssignal des zweiten Analog-Digital-Wandlers 31. Das Ausgangssignal des zweiten Analog-Digital-Wandlers 31 ist somit ebenfalls ein Maß für das von der Schwinge 5 ausgeübte Drehmoment in digitaler Form.

Der zweite Analog-Digital-Wandler 31 ist mit der zweiten Auswerteeinrichtungen 23 z.B. über eine Leitung oder einen Bus 33, der vorzugsweise als ein SPI-Bus ausgeführt ist, verbunden. Die zweite Auswerteeinrichtung 23 ist eingerichtet, aufgrund des vom zweiten Analog-Digital-Wandler 31 stammenden Ausgangssignals das vom der Schwinge 5 ausgeübte Drehmoment zu ermitteln.

Die beiden analogen Signalverarbeitungsvorrichtungen 30, 32 und die beiden Analog-Digital-Wandler 29, 31 sind insbesondere alle auf der Platine 26 befestigt, bilden also eine Baugruppe. Die beiden Einrichtungen 27, 28 können z.B. mit ihren Signalverarbeitungsvorrichtungen 30, 32 z.B. über relativ kurze Kabel verbunden sein.

Somit bietet die Messvorrichtung 20 zwei unabhängig voneinander arbeitende Momentmessungen der Schwinge 5.

Die beiden Auswerteeinrichtungen 22, 23 können über den Bus 24 kommunizieren, und somit ihre Drehmomentmessungen miteinander vergleichen. Die beiden Auswerteeinrichtungen 22, 23 oder zumindest eine der beiden Auswerteeinrichtungen 22, 23 können bzw. kann mit der Steuervorrichtung 9 verbunden sein, welche die gemessenen Drehmomente weiter verarbeitet.

Im Falle des vorliegenden Ausführungsbeispiels weist die Messvorrichtung 20 noch eine elektrische Energieversorgung 34 z.B. mit zwei Spannungsversorgungen 35, 36 für die analoge und digitale Signalverarbeitung auf. Die Spannungsversorgung 35 erzeugt z.B. eine elektrische Spannung für die beiden analogen Signalverarbeitungsvorrichtungen 30, 32 und die elektrische Spannungsversorgung 36 erzeugt z.B. eine elektrische Spannung für die beiden Analog-Digital-Wandler 29, 31 und die beiden Auswerteeinrichtungen 22, 23.

Im Falle des vorliegenden Ausführungsbeispiels ist die digitale Auswerteeinheit 22 derart ausgeführt, dass sie über eine gemeinsame Leitung / Busleitung 37 parallel vom Analog-Digital-Wandler 29 und vom Analog-Digital-Wandler 31 eine A/D-Wandlung anfordert. Dadurch ist sichergestellt, dass die beiden Auswerteeinrichtungen 22, 23 die Drehmomente der Schwinge 5 zu gleichen Zeitpunkten ermitteln.

Die beiden Analog-Digital-Wandler 29, 31 ermitteln daraufhin eigenständig ein Drehmoment und übertragen diese an die jeweilige digitale Auswerteeinheit 22, 23. Eine SPI-Busverbindung ist vorzugsweise aus drei Datenleitungen 46, 33, 37 gebildet, wobei eine Datenleitung 37 als Eingangleitung und die beiden anderen Datenleitungen 33, 46 als Ausgangleitungen der Platine 26 dienen.

Zu Überwachungszwecken kann es vorgesehen sein, dass die Anforderung der A/D-Wandlung von der Auswerteeinrichtung 22 auch an die Auswerteeinrichtung 23 übertragen wird.

Im Falle des vorliegenden Ausführungsbeispiels benötigen die beiden Einrichtungen 27, 28 jeweils eine elektrische Referenzspannung. Diese werden im Falle des vorliegenden Ausführungsbeispiels von einem ersten Digital-Analog-Wandler 38 und einem zweiten Digital-Analog-Wandler 39 erzeugt. Der erste Digital-Analog-Wandler 38 erzeugt die Referenzspannung für die zweite Einrichtung 28 und der zweite Digital-Analog-Wandler 39 erzeugt die Referenzspannung für die erste Einrichtung 27. Der erste Digital-Analog-Wandler 38 ist dazu mit den zweiten Dehnmessstreifen 44 der zweiten Einrichtung 28 über eine elektrische Leitung 42 und der zweite Digital-Analog-Wandler 39 ist mit den zweiten Dehnmessstreifen 45 der ersten Einrichtung 27 über eine elektrische Leitung 43 verbunden.

Des Weitern sind im Falle des vorliegenden Ausführungsbeispiels der erste Analog-Digital-Wandler 29 und der erste Digital-Analog-Wandler 38 als ein erstes integriertes Bauteil 40 und der der zweite Analog-Digital-Wandler 31 und der zweite Digital-Analog-Wandler 39 als ein zweite integriertes Bauteil 41 ausgeführt.

Um eine zuverlässige Ermittlung des Drehmoments der Schwinge 5 zu erreichen, sollte unter Anderem sichergestellt sein, dass die am Eingang der beiden Analog-Digital-Wandler 29, 31 anliegenden elektrischen Spannungen nicht verfälscht sind. Um dies zu überprüfen, ist es im Falle des vorliegen Ausführungsbeispiels vorgesehen, die Eingangssignale der beiden Analog-Digital-Wandler 29, 31 für Testzwecke gezielt zu verfälschen. Dies wird z.B. folgendermaßen durchgeführt:
Mittels eines von der ersten Ermittlungseinrichtung 22 erzeugten und über die Datenleitung 37 an die beiden Digital-Analog-Wandler 38, 39 übermittelten Befehls, verändern die beiden Digital-Analog-Wandler 38, 39 ihre Ausgangsspannungen und somit die Versorgungsspannungen bzw. Referenzspannungen der beiden Einrichtungen 27, 28. Dies verändert die Ausgangssignale der Einrichtungen 27, 28 und somit die Ausgangssignale der Datenleitungen 46, 33 der beiden Analog-Digital-Wandler 29, 31. Die beiden Ermittlungseinrichtungen 22, 23 können auf diese Weise einen Fehler in den analogen Signalketten, d.h. den Signalpfaden von den beiden Einrichtungen 27, 28 bis zu den beiden Analog-Digital-Wandlern 29, 31 erkennen.

Da der Test der analogen Signalkette mittels der integrierten Digital-Analog-Wandler 38, 39 erfolgt, kann der Verdrahtungsaufwand innerhalb des der Schwinge 5 zugeordneten Gelenks reduziert werden.

Der beschriebene Test kann gemäß einem bevorzugten Ausführungsbeispiel für alle Gelenke des Roboters durchgeführt werden, so dass ein Fehler in den analogen Signalketten eines jeden Gelenks sicher erfassbar ist.

## Patentansprüche

1. Messvorrichtung zum Ermitteln eines auf eine Achse wirkenden Drehmoments, aufweisend
- eine erste Einrichtung (27), die eingerichtet ist, ein dem Drehmoment zugeordnetes erstes analoges elektrisches Signal zu erzeugen,
- einen der ersten Einrichtung (27) nachgeschalteten ersten Analog-Digital-Wandler (29), der eingerichtet ist, aus dem ersten analogen elektrischen Signal ein dem Drehmoment zugeordnetes erstes digitalisiertes Signal zu erzeugen,
- eine dem ersten Analog-Digital-Wandler (29) nachgeschaltete erste digitale Auswerteeinrichtung (22), die eingerichtet ist, aus dem ersten digitalisierten Signal das Drehmoment zu ermitteln,
- eine zweite Einrichtung (28), die eingerichtet ist, ein dem Drehmoment zugeordnetes zweites analoges elektrisches Signal zu erzeugen,
- einen der zweiten Einrichtung (28) nachgeschalteten zweiten Analog-Digital-Wandler (31), der eingerichtet ist, aus dem zweiten analogen elektrischen Signal ein dem Drehmoment zugeordnetes zweites digitalisiertes Signal zu erzeugen, und
- eine dem zweiten Analog-Digital-Wandler (31) nachgeschaltete zweite digitale Auswerteeinrichtung (23), die eingerichtet ist, unabhängig von der ersten digitalen Auswerteeinrichtung aus dem zweiten digitalisierten Signal das Drehmoment zu ermitteln,
**gekennzeichnet durch** eine als ein erster Digital-Analog-Wandler (38) ausgeführte erste elektrische Spannungsquelle (38), die eingerichtet ist, eine erste Referenzspannung für die zweite Einrichtung (28) zu erzeugen, und eine als ein zweiter Digital-Analog-Wandler (39) ausgeführte zweite elektrische Spannungsquelle (39), die eingerichtet ist, eine zweite Referenzspannung für die erste Einrichtung (27) zu erzeugen, wobei die erste digitale Auswerteeinrichtung (22) mit dem ersten Digital-Analog-Wandler (38) verbunden ist, und eingerichtet ist den Wert der von dem ersten Digital-Analog-Wandler (38) erzeugten ersten Referenzspannung einzustellen, und die erste digitale Auswerteeinrichtung (22) mit dem zweiten Digital-Analog-Wandler (39) verbunden ist, und eingerichtet ist den Wert der von dem zweiten Digital-Analog-Wandler (39) erzeugten zweiten Referenzspannung einzustellen.

2. Vorrichtung nach Anspruch 1, bei der
- die erste Einrichtung (27) einen ersten Dehnmessstreifen (44) oder eine Gruppe von ersten Dehnmessstreifen (44) aufweist, die insbesondere auf einem mechanischen Messkörper aufgebracht sind, wobei insbesondere die einzelnen ersten Dehnmessstreifen (44) der Gruppe von ersten Dehnmessstreifen (44) als Vollbrücke geschaltet sind,
- die zweite Einrichtung (28) einen zweiten Dehnmessstreifen (45) oder eine Gruppe von zweiten Dehnmessstreifen (45) aufweist, die insbesondere auf einem mechanischen Messkörper aufgebracht sind, wobei insbesondere die einzelnen zweiten Dehnmessstreifen (45) der Gruppe von zweiten Dehnmessstreifen (45) als Vollbrücke geschaltet sind,
- zwischen der ersten Einrichtung (27) und dem ersten Analog-Digital-Wandler (29) eine erste analoge Signalverarbeitungsvorrichtung (30) geschaltet ist, die eingerichtet ist, das erste analoge elektrische Signal zu verarbeiten, sodass dem ersten Analog-Digital-Wandler (29) das analog verarbeitete erste analoge elektrische Signal zugeführt wird,
- zwischen der zweiten Einrichtung (28) und dem zweiten Analog-Digital-Wandler (31) eine zweite analoge Signalverarbeitungsvorrichtung (32) geschaltet ist, die eingerichtet ist, das zweite analoge elektrische Signal zu verarbeiten, sodass dem zweiten Analog-Digital-Wandler (31) das analog verarbeitete zweite analoge elektrische Signal zugeführt wird,
- die erste digitale Auswerteeinrichtung als ein erstes FPGA (22) ausgeführt ist, und/oder
- die zweite digitale Auswerteeinrichtung als ein zweiter FPGA (23) ausgeführt ist.

3. Vorrichtung nach Anspruch 1 oder 2, bei der
- der erste Analog-Digital-Wandler (29) und der zweite Analog-Digital-Wandler (31) zu einer ersten Baugruppe (26) zusammen gefasst sind, und/oder
- die beiden digitalen Auswerteeinrichtungen (22, 23) zu einer zweiten Baugruppe (21) zusammengefasst sind und der erste Analog-Digital-Wandler (29) mit der ersten digitalen Auswerteeinrichtung (22) über eine erste Datenleitung (46) und der zweite Analog-Digital-Wandler (31) mit der zweiten digitalen Auswerteeinrichtung (23) über eine zweite Datenleitung (33) kommunizieren.

4. Vorrichtung nach einem der Ansprüche 1 bis 3, bei der einer der digitalen Auswerteeinrichtungen (22) eingerichtet ist insbesondere über eine dritte Datenleitung (37) den beiden Analog-Digital-Wandlern (29, 31) insbesondere gleichzeitig einen Befehl zu schicken, damit diese ihre digitalisierten Signale erzeugen und an die jeweiligen Auswerteeinrichtungen (22, 23) abgeben.

5. Vorrichtung nach Anspruch 3 oder 4, bei der die erste, zweite und dritte Datenleitung (46, 33, 37) einen Datenbus, insbesondere einen SPI-Bus, bilden, wobei die erste und zweite Datenleitung (46, 33) als Ausgangleitungen und die dritte Datenleitung (37) als Eingangleitung dienen.

6. Vorrichtung nach einem der Ansprüche 1 bis 5, bei der die beiden digitalen Auswerteeinrichtungen (22, 23) über einen Bus (24) verbunden sind, und eingerichtet ist eine Information über die ermittelten Drehmomente auszutauschen.

7. Vorrichtung nach einem der Ansprüche 1 bis 6, bei der der erste Analog-Digital-Wandler (29) und der erste Digital-Analog-Wandler (38) zu einem ersten integrierten Bauteil (40) zusammen gefasst sind, und/oder der zweite Analog-Digital-Wandler (31) und der zweite Digital-Analog-Wandler (39) zu einem zweiten integrierten Bauteil (41) zusammen gefasst sind.

8. Roboter, aufweisend
- eine Steuervorrichtung (9),
- einen mittels der Steuervorrichtung (9) bewegbaren Roboterarm (2), der mehrere Glieder aufweist, von denen wenigstens eines, gesteuert durch die Steuervorrichtung (9), mittels eines ein Getriebe (12) aufweisenden Antrieb bezüglich einer Drehachse (A2) bewegbar ist, und
- eine Messvorrichtung (20) nach einem der Ansprüche 1 bis 7, wobei insbesondere die erste Einrichtung (27) und die zweite Einrichtung (28) der Messvorrichtung (20) derart mit dem Getriebe (12) gekoppelt sind, dass das erste und das zweite analoge elektrische Signal jeweils einer abtriebsseitigen Drehmomentmessung des relevanten Gliedes (5) auf seine Drehachse (A2) zugeordnet sind.

## Claims

1. A measuring device for determining a torque acting on an axis, comprising
- a first device (27), which is arranged to generate a first analog electrical signal related to the torque,
- a first analog-digital converter (29) downstream from the first device (27), which is arranged to generate from the first analog electrical signal a first digitized signal related to the torque,
- a first digital evaluating device (22) downstream from the first analog-digital converter (29), which is arranged to determine the torque from the first digitized signal,
- a second device (28), which is arranged to generate a second analog electrical signal related to the torque,
- a second analog-digital converter (31) downstream from the second device (28), which is arranged to generate from the second analog electrical signal a second digitized signal related to the torque,
- a second digital evaluating device (23) downstream from the second analog-digital converter (31), which is arranged to determine the torque from the second digitized signal independently from the first digital evaluating device,
**characterised by** a first electrical voltage source (38) designed as a first digital-analog converter (38), which is arranged to generate a first reference voltage for the second device (28), and by a second electrical voltage source (39) designed as a second digital-analog converter (39), which is arranged to generate a second reference voltage for the first device (27), wherein the first digital evaluating device (22) is connected to the first digital-analog converter (38) and is arranged to set the value of the first reference voltage generated by the first digital-analog converter (38), and the first digital evaluating device (22) is connected to the second digital-analog converter (39), and is arranged to set the value of the second reference voltage generated by the second digital-analog converter (39).

2. The device according to claim 1, wherein
- the first device (27) comprises a first strain gauge (44) or a group of first strain gauges (44), which in particular are arranged on a mechanical measurement body, wherein in particular the individual first strain gauges (44) of the group of first strain gauges (44) are wired as a full bridge,
- the second device (28) comprises a second strain gauge (45) or a group of second strain gauges (45), which in particular are arranged on a mechanical measurement body, wherein in particular the individual second strain gauges (45) of the group of second strain gauges (45) are wired as a full bridge,
- between the first device (27) and the first analog-digital converter (29) a first analog signal processing device (30) is connected, which is arranged to process the first analog electrical signal, so that the analog-processed first analog electrical signal is fed to the first analog-digital converter (29),
- between the second device (28) and the second analog-digital converter (31) a second analog signal processing device (32) is connected, which is arranged to process the second analog electrical signal, so that the analog-processed second analog electrical signal is fed to the second analog-digital converter (31),
- the first digital evaluating device is designed as a first FPGA (22), and/or
- the second digital evaluating device is designed as a second FPGA (23).

3. The device according to claim 1 or 2, wherein
- the first analog-digital converter (29) and the second analog-digital converter (31) are combined into a first assembly (26), and/or
- the two digital evaluating devices (22, 23) are combined into a second assembly (21) and the first analog-digital converter (29) communicates with the first digital evaluating device (22) via a first data line (46) and the second analog-digital converter (31) communicates with the second digital evaluating device (23) via a second data line (33).

4. The device according to one of claims 1 to 3, wherein one of the digital evaluating devices (22) is arranged to, in particular simultaneously, send a command to the two analog-digital converters (29, 31), in particular via a third data line (37), so that they generate their digitized signals and deliver them to the respective evaluating devices (22, 23).

5. The device according to claim 3 or 4, wherein the first, second and third data line (46, 33, 37) form a data bus, in particular an SPI bus, the first and second data line (46, 33) serving as output lines and the third data line (37) serving as an input line.

6. The device according to one of claims 1 to 5, wherein the two digital evaluating devices (22, 23) are connected via a bus (24) and are arranged to exchange information about the determined torques.

7. The device according to one of claims 1 to 6, wherein the first analog-digital converter (29) and the first digital-analog converter (38) are combined into a first integrated component (40), and/or the second analog-digital converter (31) and the second digital-analog converter (39) are combined into a second integrated component (41).

8. A robot, comprising
- a control device (9),
- a robot arm (2) movable by means of the control device (9), the robot arm (2) comprising a plurality of members, at least one of which is, controlled by the control device (9), movable in reference to an axis of rotation (A2) by means of a drive comprising a transmission (12), and
- a measuring device (20) according to one of claims 1 to 7, wherein in particular the first device (27) and the second device (28) of the measuring device (20) are coupled with the transmission (12) in such a way that the first and second analog electrical signal are each related to an output-side torque measurement of the relevant member (5) in reference to its axis of rotation (A2) respectively.

## Revendications

1. Dispositif de mesure pour la détermination d'un couple agissant sur un axe, présentant
- un premier équipement (27), qui est conçu pour générer un premier signal électrique analogique associé au couple,
- un premier convertisseur analogique numérique (29) en aval du premier équipement (27), qui est conçu pour générer un premier signal numérisé associé au couple à partir du premier signal électrique analogique,
- un premier équipement d'évaluation numérique (22) en aval du premier convertisseur analogique numérique (29), qui est conçu pour déterminer le couple à partir du premier signal numérisé,
- un deuxième équipement (28), qui est conçu pour générer un deuxième signal électrique analogique associé au couple,
- un deuxième convertisseur analogique numérique (31) en aval du deuxième équipement (28), qui est conçu pour générer un deuxième signal numérisé associé au couple à partir du deuxième signal électrique analogique, et
- un deuxième équipement d'évaluation numérique (23) en aval du deuxième convertisseur analogique numérique (31), qui est conçu pour déterminer le couple à partir du deuxième signal numérisé indépendamment du premier équipement d'évaluation numérique,
**caractérisé par** une première source de tension électrique (38) réalisée sous forme de premier convertisseur numérique analogique (38), qui est conçue pour générer une première tension de référence pour le deuxième équipement (28), et une deuxième source de tension électrique (39) réalisée sous forme de deuxième convertisseur numérique analogique (39), qui est conçue pour générer une deuxième tension de référence pour le premier équipement (27), dans lequel le premier équipement d'évaluation numérique (22) est relié au premier convertisseur numérique analogique (38), et est conçu pour régler la valeur de la première tension de référence générée par le premier convertisseur numérique analogique (38) et le premier équipement d'évaluation numérique (22) est relié au deuxième convertisseur numérique analogique (39), et est conçu pour régler la valeur de la deuxième tension de référence générée par le deuxième convertisseur numérique analogique (39).

2. Dispositif selon la revendication 1, dans lequel
- le premier équipement (27) présente une première jauge de contrainte (44) ou un groupe de premières jauges de contrainte (44), qui sont appliquées en particulier sur un corps de mesure mécanique, dans lequel en particulier les différentes premières jauges de contrainte (44) du groupe de premières jauges de contrainte (44) sont montées en pont intégral,
- le deuxième équipement (28) présente une deuxième jauge de contrainte (45) ou un groupe de deuxièmes jauges de contrainte (45), qui sont appliquées en particulier sur un corps de mesure mécanique, dans lequel en particulier les différentes deuxièmes jauges de contrainte (45) du groupe de deuxièmes jauges de contrainte (45) sont montées en pont intégral,
- un premier dispositif de traitement de signal analogique (30) est monté entre le premier équipement (27) et le premier convertisseur analogique numérique (29), qui est conçu pour traiter le premier signal électrique analogique, de sorte que le premier signal électrique analogique traité de façon analogique est amené au premier convertisseur analogique numérique (29),
- un deuxième dispositif de traitement de signal analogique (32) est monté entre le deuxième équipement (28) et le deuxième convertisseur analogique numérique (31), qui est conçu pour traiter le deuxième signal électrique analogique, de sorte que le deuxième signal électrique analogique traité de façon analogique est amené au deuxième convertisseur analogique numérique (31),
- le premier équipement d'évaluation numérique est réalisé sous forme de premier FPGA (22), et/ou
- le deuxième équipement d'évaluation numérique est réalisé sous forme de deuxième FPGA (23).

3. Dispositif selon la revendication 1 ou 2, dans lequel
- le premier convertisseur analogique numérique (29) et le deuxième convertisseur analogique numérique (31) sont regroupés en un premier module (26), et/ou
- les deux équipements d'évaluation numériques (22, 23) sont regroupés en un deuxième module (21) et le premier convertisseur analogique numérique (29) communique avec le premier équipement d'évaluation numérique (22) par le biais d'une première ligne de données (46) et le deuxième convertisseur analogique numérique (31) communique avec le deuxième équipement d'évaluation numérique (23) par le biais d'une deuxième ligne de données (33).

4. Dispositif selon l'une quelconque des revendications 1 à 3, dans lequel un des équipements d'évaluation numériques (22) est conçu pour envoyer un ordre en particulier en même temps aux deux convertisseurs analogiques numériques (29, 31) en particulier par le biais d'une troisième ligne de données (37), pour que ceux-ci génèrent leurs signaux numérisés et les transmettent aux équipements d'évaluation (22, 23) respectifs.

5. Dispositif selon la revendication 3 ou 4, dans lequel la première, deuxième et troisième ligne de données (46, 33, 37) forment un bus de données, en particulier un bus SPI, dans lequel la première et deuxième ligne de données (46, 33) servent de lignes de sortie et la troisième ligne de données (37) sert de ligne d'entrée.

6. Dispositif selon l'une quelconque des revendications 1 à 5, dans lequel les deux équipements d'évaluation numériques (22, 23) sont reliés par le biais d'un bus (24), et est conçu pour échanger une information sur les couples déterminés.

7. Dispositif selon l'une quelconque des revendications 1 à 6, dans lequel le premier convertisseur analogique numérique (29) et le premier convertisseur numérique analogique (38) sont regroupés en un premier module intégré (40), et/ou le deuxième convertisseur analogique numérique (31) et le deuxième convertisseur numérique analogique (39) sont regroupés en un deuxième module intégré (41).

8. Robot, présentant
- un dispositif de commande (9),
- un bras de robot (2) mobile au moyen du dispositif de commande (9), qui présente plusieurs membres, dont au moins un, commandé par le dispositif de commande (9) est mobile par rapport à un axe de rotation (A2) au moyen d'un entraînement présentant une transmission (12), et
- un dispositif de mesure (20) selon l'une quelconque des revendications 1 à 7, dans lequel en particulier le premier équipement (27) et le deuxième équipement (28) du dispositif de mesure (20) sont couplés à la transmission (12) de telle manière que le premier et le deuxième signal électrique analogique sont associés respectivement à une mesure de couple côté sortie du membre (5) concerné sur son axe de rotation (A2).
